# FASCICULE DE BREVET EUROPEEN

(11) **EP 0 815 747 B1**
(45) Date de publication et mention de la délivrance du brevet: **22.11.2000**
(21) Numéro de dépôt: 96201793.5
(22) Date de dépôt: 30.06.1996
(51) Int. Cl.: A23P 1/12, A23P 1/14, A23L 1/18

(54) **Procédé et installation de fabrication d'un produit alimentaire par extrusion et cuisson**
Verfahren und Vorrichtung zur Herstellung von extrudierten und gekochten Nahrungsmitteln
Process and apparatus for making extruded and cooked food products

(43) Date de publication de la demande: 07.01.1998
(73) Titulaire: SOCIETE DES PRODUITS NESTLE S.A., 1800 Vevey (CH)
(72) Inventeur: Pfaller, Werner, 1350 Orbe (CH); Geromini, Osvaldo, 1358 Valeyres (CH); Heck, Ernst, 1302 Vufflens-la-Ville (CH)
(74) Mandataire: Wavre, Claude-Alain

(56) Documents cités:
- EP-A- 0 262 300
- EP-A- 0 512 730
- US-A- 2 836 851
- US-A- 3 861 287
- US-A- 4 431 311

## Description

La présente invention a pour objet un procédé de fabrication d'un produit alimentaire par extrusion et une installation pour la mise en oeuvre du procédé.

EP0262300 décrit un procédé et une installation pour la production d'une masse de chocolat qui impliquent l'utilisation d'un extrudeur divisé en zones dans lesquelles se déroulent des étapes successives de stérilisation et désodorisation de morceaux de fèves bruts à la vapeur sous pression, rôtissage des morceaux de fèves après les avoir réduits en poudre dans un moulin à marteau branché en parallèle sur deux zones séparées par un élément de vis à pas inverse, addition et mélange de sucre en poudre à la poudre de fèves rôtie, addition de beurre de cacao, malaxage et extrusion.

La présente invention a pour but de proposer un procédé et une installation prévoyant une utilisation efficace d'un extrudeur bivis particulièrement bien adaptée à la fabrication de produits alimentaires cuits-extrudés présentant un bon goût de cuit.

A cet effet, dans le procédé selon la présente invention, on introduit, mélange et cuit une matière alimentaire dans un premier tronçon d'un extrudeur bivis, on prolonge la cuisson de la masse obtenue dans un cuiseur branché en parallèle sur le premier tronçon et un second tronçon de l'extrudeur séparé dynamiquement du premier, on réintroduit la masse cuite dans le second tronçon, on extrude la masse en la faisant passer au travers d'une filière et l'on découpe le produit extrudé.

De même, l'installation selon la présente invention comprend un extrudeur bivis séparé en deux tronçons distincts par un dispositif de séparation dynamique, un cuiseur branché en parallèle sur le premier tronçon et le second tronçon, une filière et un dispositif de découpe.

Un tel procédé et un tel appareil permettent effectivement une utilisation efficace d'un extrudeur bivis particulièrement bien adaptée à la fabrication de produits alimentaires cuits-extrudés présentant un bon goût de cuit.

Dans le présent exposé, l'expression "matière alimentaire" couvre tous les composants introduits ensemble ou séparément, simultanément ou successivement dans le premier tronçon de l'extrudeur et traités tous ensemble au moins sur une partie de ce tronçon.

Pour mettre en oeuvre le présent procédé, on peut partir de matières alimentaires dont on peut produire par extrusion les produits alimentaires les plus divers tels que céréales pour petit déjeuner, céréales infantiles, amuses-bouches, panures, confiseries ou produits pour animaux familiers, par exemple.

On peut choisir les composants et leurs proportions respectives puis traiter ces matières dans l'extrudeur dans des conditions de pression, cisaillement et température adaptées aux caractéristiques du produit que l'on désire obtenir, notamment en fonction de la teneur en eau et du degré d'expansion que l'on désire obtenir après la filière.

On peut également réserver des ingrédients sensibles à la chaleur tels que des vitamines ou des agents colorants entrant dans la composition du produit et ne les introduire dans la masse cuite qu'au niveau du second tronçon, par exemple.

On peut traiter dans le premier tronçon de l'extrudeur une matière présentant une teneur en eau de 18-25%, maintenir cette teneur en eau dans le cuiseur et la réduire à 14-22% dans le second tronçon par échappement de vapeur pour obtenir un produit expansé, par exemple.

On peut déshydrater un tel produit expansé découpé jusqu'à une teneur en eau inférieure à 5%, par exemple.

On peut traiter dans le premier tronçon de l'extrudeur une matière présentant une teneur en eau de 24-36%, et maintenir cette teneur en eau dans le cuiseur et dans le second tronçon pour obtenir un produit non ou peu expansé, par exemple.

On peut transformer en flocons un tel produit non ou peu expansé découpé par laminage et toastage, par exemple.

L'installation pour la mise en oeuvre du procédé selon la présente invention comprend donc un extrudeur bivis séparé en deux tronçons distincts par un dispositif de séparation dynamique, un cuiseur branché en parallèle sur le premier tronçon et le second tronçon, une filière d'extrusion et un dispositif de découpe.

Le dispositif de séparation dynamique peut être réalisé sous forme d'une zone de blocage à pas inverse du bivis, par exemple.

Dans cette forme de réalisation du dispositif de séparation dynamique, on peut prévoir une ouverture de sortie du premier tronçon de l'extrudeur à cheval sur une zone de compression et la zone de blocage du bivis, par exemple.

On peut prévoir une ouverture de sortie du deuxième tronçon dans l'axe ou sur le côté de l'extrémité aval de l'extrudeur, par exemple.

L'ouverture de sortie du second tronçon peut déboucher directement sur la filière ou y être reliée par une conduite adéquate, par exemple.

On peut prévoir un dispositif d'alimentation pour le premier tronçon, sous forme d'une ou plusieurs ouvertures d'alimentation prévues dans un fourreau du bivis, à partir de l'extrémité amont de l'extrudeur. On peut prévoir une ouverture de retour ou d'entrée de la masse cuite dans le second tronçon, dans le fourreau du bivis, à hauteur d'une zone de transport suivant la zone de blocage du bivis, par exemple.

A hauteur de l'ouverture d'entrée du second tronçon, on peut prévoir un dispositif de dégazage ou échappement de vapeur sous forme d'une conduite d'aspiration par le vide reliée à une pompe, d'une ouverture donnant dans directement dans l'atmosphère ambiante ou d'une vanne de contre-pression, par exemple.

Le cuiseur peut être branché en parallèle sur le premier tronçon et le second tronçon par l'intermédaire de conduites adéquates reliant une entrée du cuiseur à l'ouverture de sortie du premier tronçon et une sortie du cuiseur à l'ouverture d'entrée du second tronçon.

On peut prévoir une géométrie des vis adaptée, pour chaque tronçon, à la matière à traiter et au produit que l'on veut obtenir. On peut prévoir notamment des zones successives et/ou alternées de transport, compactage, compression, pétrissage ou mélange, par exemple. Pour définir ces différentes zones, on peut jouer sur le pas des vis, l'espace laissé libre pour la matière à traiter défini notamment par les diamètres respectifs des noyaux et des filets, ou l'intercalage de bilobes de différentes formes, par exemple. On peut également jouer sur une subdivision du fourreau de l'extrudeur en plusieurs compartiments indépendants dont on peut régler individuellement la température par circulation d'un fluide de refroidissement ou de chauffage, par exemple.

Enfin, l'énergie mécanique nécessaire pour traiter la matière alimentaire dans le premier tronçon du bivis, traiter la masse cuite dans le second tronçon et faire passer la masse au travers de la filière peut être fournie par un seul moyen d'entraînement des vis du bivis, tel qu'un moteur électrique, par exemple.

Pour assurer le passage de la masse de matière alimentaire cuite au travers d'une filière, on peut assister ou soulager ce moteur à l'aide d'une pompe positive telle qu'une pompe à engrenage branchée en amont de la filière, par exemple.

L'installation selon la présente invention est décrite ci-après en référence au dessin annexé dans lequel:
- la figure 1 représente schématiquement une forme de réalisation de l'installation destinée à la fabrication d'un produit expansé,
- la figure 2 représente schématiquement une forme de réalisation de l'installation destinée à la fabrication d'un produit non ou peu expansé,
- la figure 3 représente schématiquement une forme de réalisation de la géométrie des vis de l'installation selon la figure 1,
- la figure 4 représente schématiquement une forme de réalisation de la géométrie des vis de l'installation selon la figure 2,
- la figure 5 représente de manière plus détaillée la forme de réalisation du dispositif de séparation dynamique des vis représentées aux figures 3 et 4.

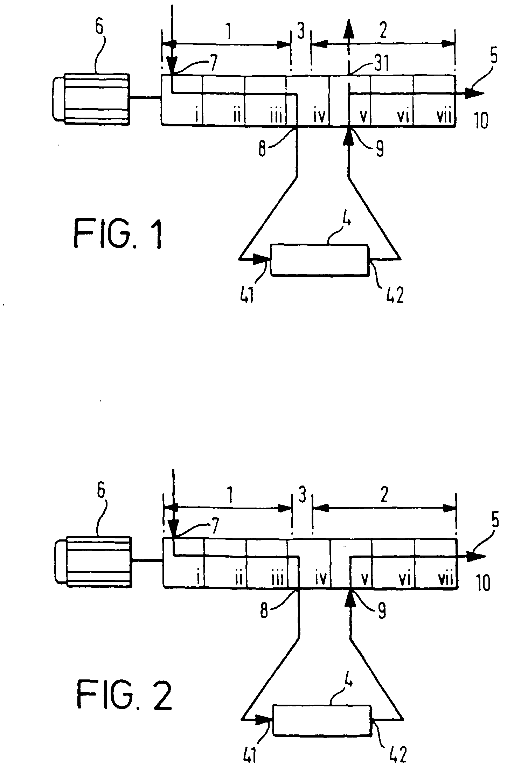

Dans la forme de réalisation représentée à la figure 1, la présente installation comprend un extrudeur bivis séparé en deux tronçons distincts 1 et 2 par un dispositif de séparation dynamique 3, un cuiseur 4 branché en parallèle sur le premier tronçon 1 et sur le deuxième tronçon 2, une filière 5 et un dispositif de découpe non représenté.

Le cuiseur peut être réalisé sous forme d'un tube d'attente à double manteau ou d'une cuve cylindrique horizontale à double manteau renfermant une vis d'Archimède entraînée par un moteur, par exemple.

Le bivis est entraîné par un moteur 6 et il est renfermé dans un fourreau à double paroi subdivisé en sept compartiments i-vii dans chacun desquels on peut faire circuler un fluide de refroidissement ou de réchauffement.

Dans cette installation, une matière A est introduite dans le premier tronçon 1 de l'extrudeur au travers d'un dispositif d'alimentation comprenant une ouverture d'alimentation 7 prévue dans le premier compartiment i du fourreau. La masse de matière A traitée dans le premier tronçon 1 sort de l'extrudeur par une ouverture de sortie 8 prévue dans le compartiment iv du fourreau à hauteur du dispositif de séparation dynamique 3 et reliée à une ouverture d'entrée 41 dans le cuiseur 4.

La masse cuite dans le cuiseur en ressort par une ouverture de sortie 42 reliée à une ouverture de retour ou d'entrée 9 de la masse cuite dans le second tronçon 2 de l'extrudeur, prévue dans le cinquième compartiment v du fourreau, en aval du dispositif de séparation dynamique 3.

A l'entrée dans le second tronçon 2, la teneur en eau de la masse de matière cuite est réduite par l'intermédiaire d'un dispositif de dégazage ou échappement de vapeur comprenant une conduite d'aspiration par le vide 31 reliée à une pompe non représentée.

La masse de matière traitée dans le deuxième tronçon 2 sort de l'extrudeur par une ouverture de sortie 10 prévue dans l'axe de son extrémité aval et reliée à la filière 5 à la sortie de laquelle elle peut s'expanser.

Dans la forme de réalisation représentée à la figure 2, la présente installation ne comprend pas de dispositif de dégazage ou échappement de vapeur. Elle présente en outre par rapport à la forme de réalisation représentée à la figure 1 des différences au niveau de la géométrie des vis.

Dans cette installation destinée à la fabrication d'un produit non ou peu expansé, la masse cuite provenant du cuiseur n'est donc pas dégazée et/ou partiellement déshydratée à son entrée dans le second tronçon de l'extrudeur.

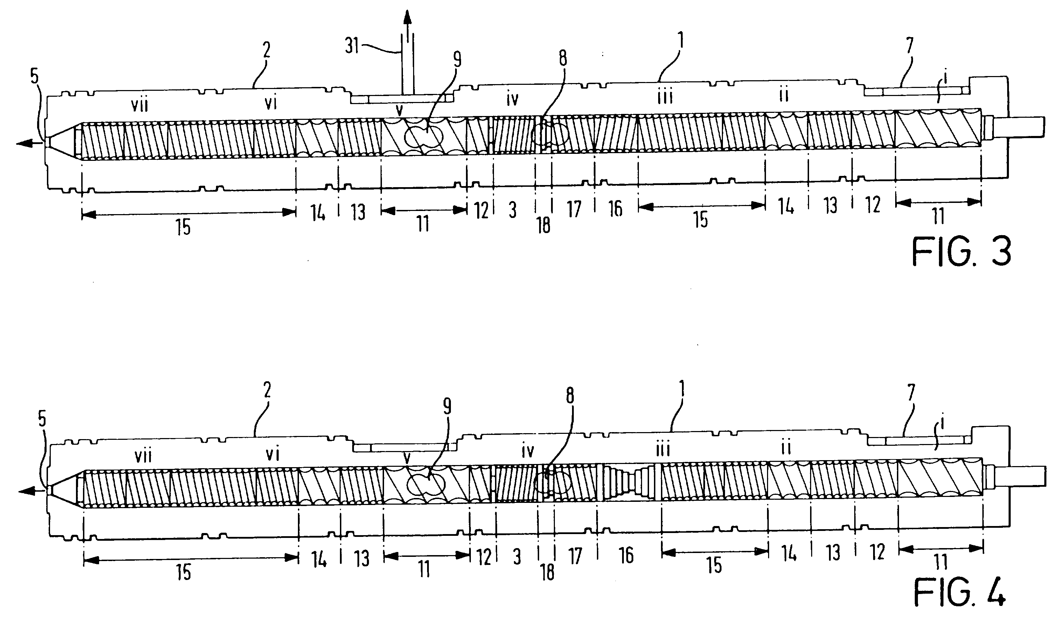

Dans la forme de réalisation représentée à la figure 3, la géométrie des vis est semblable sur une grande partie des deux tronçons 1 et 2 de l'extrudeur, mais elle présente des différences notables à l'approche des sorties respectives de ces tronçons.

Dans le tronçon 1, les vis présentent successivement des zones de transport 11 (200/100), compactage 12 (100/50), compression 13 (100/33), transport intermédiaire 14 (100/66), compression 15 (100/35 + 200/28), pétrissage 16 (100/-33), compression 17 (100/35), expulsion 18 (trois bilobes de 12,5), et blocage 3 (100/-25).

Dans le tronçon 2, les vis présentent successivement des zones de compactage 12 (50/50), transport 11 (200/100), compression 13 (100/33), transport 14 (100/66), et compression 15 (100/35 + 200/28 + 100/33 + 100/35).

Les chiffres entre parenthèses donnent la longueur de la zone et la longueur du pas en mm, pour des vis de 88 mm de diamètre et un entre-axes de 72 mm, l'installation comprenant en l'occurrence un extrudeur bivis CLEXTRAL® BC-72.

La géométrie représentée n'est pas limitée à ces dimensions données à titre d'exemple. Elle peut être transposée sur d'autres modèles d'extrudeurs, notamment les modèles BC-45 (vis de 55 mm de diamètre, entre-axes de 45 mm) ou BC-72 (vis de 115 mm de diamètre, entre-axes de 92 mm) de la même série, par exemple.

Les pas de vis sont de préférence doubles, excepté le pas inverse de la zone de blocage qui est de préférence simple.

Au contraire du pas inverse de la zone de pétrissage 16 qui présente sur son pourtour des encoches pour le passage de la masse traitée, le pas inverse de la zone de blocage 3 n'en présente aucune de manière à pouvoir jouer avec la plus grande efficacité son rôle de dispositif de séparation dynamique.

L'ouverture de sortie 8 du premier tronçon 1 de l'extrudeur présente une forme oblongue axiale, en l'occurrence une forme de huit, couvrant toute la longueur de la zone d'expulsion 18, à cheval sur la zone de compression 17 et la zone de blocage 3.

L'ouverture d'entrée 9 dans le second tronçon 2 présente également une forme oblongue axiale, en l'occurrence également une forme de huit.

Dans la forme de réalisation représentée à la figure 4, la géométrie des vis sur le deuxième tronçon 2 de l'extrudeur est semblable à celle représentée à la figure 4. Par contre, la géométrie des vis sur le premier tronçon 1 en diffère quant à la zone de compression 15 (100/35 + 50/35 + 100/28 au lieu de 100/35 + 200/28). Elle en diffère aussi quant à la zone 16 qui est ici une zone de mélange formée de 10 bilobes de 15 mm d'épaisseur, au lieu d'une zone de pétrissage.

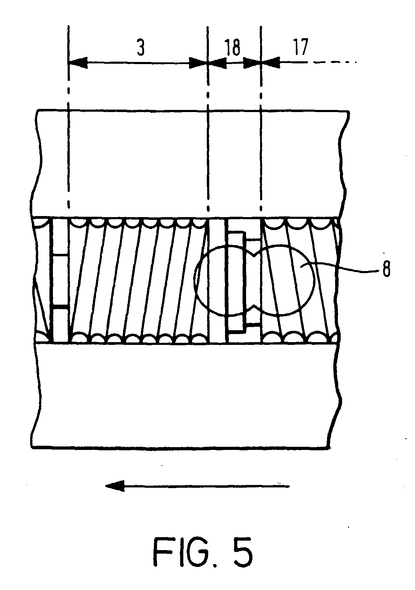

On voit plus en détail à la figure 5 comment l'ouverture de sortie 8 du premier tronçon 1 de l'extrudeur couvre toute la longueur de la zone d'expulsion 18, à cheval sur la zone de compression 17 et la zone de blocage 3. On a constaté en particulier qu'il est essentiel que cette ouverture empiète sur la zone de blocage 3, à raison d'une fraction de la longueur de l'ouverture correspondant à environ 0,1 - 0,3 fois le diamètre de la vis, par exemple, afin que la matière saisie par le ou les premiers pas de la vis inverse puisse être refoulée et expulsée efficacement.

Il est également important, pour assurer une bonne séparation dynamique, que la zone de blocage soit suffisamment longue, à savoir qu'elle présente une longueur au moins égale au diamètre des vis, pour un pas de vis inverse compris entre environ 1/5 et 1/3 de ce diamètre, par exemple.

Les exemples ci-après sont présentés à titre d'illustration du procédé selon la présente invention et des produits qu'il permet d'obtenir. Les pourcentages et parties y sont indiqués en poids.

Dans ces exemples, l'huile peut être choisie, s'il y a lieu, en fonction du rôle physique qu'elle joue dans la masse traitée et extrudée, et en fonction de son goût, neutre ou non. On peut la choisir parmi les huiles de palmiste, d'arachide ou de maïs, par exemple.

Dans ces exemples également, le mélange de farines, l'huile et l'eau sont introduits, le cas échéant, individuellement dans l'ouverture d'alimentation de l'extrudeur.

### Exemple 1

On utilise une installation telle que représentée aux figures 1 et 3. La filière d'extrusion est réalisée sous forme d'une plaque percée de 4 conduits d'extrusion cylindriques de 3,0 mm de diamètre.

On fabrique avec cette installation des céréales pour petit déjeuner avec les composants et dans les conditions présentées dans les tableaux 1a) et 1b) ci-après.

Le tableau 1a) présente les composants d'un mélange de farines, leurs proportions dans un mélange type et les domaines de leurs proportions possibles.

Le tableau 1b) présente les quantités des composants introduits dans l'extrudeur, la teneur en eau de la matière ou de la masse traitée et les conditions opératoires dans chaque tronçon.

**Tableau 1a):**

| **Mélange de farines** | | |
|---|---|---|
| Composants | Mélange type (%) | Domaine possible (%) |
| Farine de maïs | 20 | 0 - 80 |
| Farine de blé | 64 | 0 - 80 |
| Farine d'avoine | 10 | 0 - 80 |
| Sucre | 4.9 | 2 - 12 |
| Sel | 1 | 1 - 3 |
| Vitamines et oligoéléments | 0.1 | 0.1 - 0.2 |
| Total | 100 | 100 |

**Tableau 1b):**

| **Conditions opératoires** | | | |
|---|---|---|---|
| Paramètre | Unités | Valeur | Domaine possible |
| Mélange farines | kg/h | 230 | 200 - 350 |
| Huile de palmiste | kg/h | 18 | 15 - 30 |
| Eau | kg/h | 42 | 40 - 65 |
| Teneur en eau masse 1er tronçon | % | 23.2 | 18 - 25 |
| Vitesse rotation des vis | rpm | 360 | 250 - 450 |
| Température masse 1er tronçon | °C | 145 | 140-170 |
| Pression masse 1er tronçon | bar | 85 | 60-100 |
| Température masse 2ème tronçon | °C | 158 | 150 - 180 |
| Pression masse 2ème tronçon | bar | 112 | 80 - 130 |
| Ampérage | A | 291 | 250 - 450 |
| Vide entrée 2ème tronçon | mbar | 450 | 150 - 1000 |
| Teneur en eau réduite masse 2ème tronçon | % | 18.5 | 14 - 22 |
| Temps résidence cuiseur | min | 35 | 20 - 45 |
| Température cuiseur | °C | 130 | 120 - 150 |
| Densité produit extrudé | g/l | 108 | 60 - 140 |

On obtient ainsi des céréales pour petit-déjeuner au bon goût de cuit sous forme de boulettes expansées de 8-12 mm de diamètre.

### Exemple 2

On utilise une installation telle que représentée aux figures 2 et 4. La filière d'extrusion est réalisée sous forme d'une plaque percée de 12 conduits d'extrusion cylindriques de 4,0 mm de diamètre.

On fabrique avec cette installation des céréales pour petit déjeuner avec les composants et dans les conditions présentées dans les tableaux 2a) et 2b) ci-après.

Le tableau 2a) présente les composants d'un mélange farine, leurs proportions dans un mélange type et les domaines de leurs proportions possibles.

Le tableau 2b) présente les quantités des composants introduits dans l'extrudeur, la teneur en eau de la matière ou de la masse traitée et les conditions opératoires dans chaque tronçon. Une injection de vapeur est prévue dans le premier tronçon à la hauteur de la zone de transport intermédiaire 14. Il n'y a pas d'aspiration par le vide à l'entrée du deuxième tronçon.

**Tableau 2a):**

| **Mélange farine** | | |
|---|---|---|
| Composants | Mélange type (%) | Domaine possible (%) |
| Farine de maïs | 91 | 85 - 98 |
| Sucre | 6.9 | 0 - 12 |
| Sel | 2 | 0 - 3 |
| Vitamines et oligoéléments | 0.1 | 0.1 - 0.2 |
| Total | 100 | 100 |

**Tableau 2b):**

| **Conditions opératoires** | | | |
|---|---|---|---|
| Paramètre | Unités | Valeur | Domaine possible |
| Mélange farine | kg/h | 240 | 200 - 350 |
| Vapeur | kg/h | 15 | 0 - 35 |
| Eau | kg/h | 32 | 25 - 60 |
| Teneur en eau masse | % | 25.6 | 24 - 36 |
| Vitesse rotation des vis | rpm | 195 | 140 - 250 |
| Température masse 1er tronçon | °C | 125 | 115-140 |
| Pression masse 1er tronçon | bar | 50 | 40-70 |
| Température masse 2ème tronçon | °C | 91 | 80 - 100 |
| Pression masse 2ème tronçon | bar | 71 | 50 - 80 |
| Ampérage | A | 156 | 120 - 250 |
| Temps résidence cuiseur | min | 35 | 20 - 50 |
| Température cuiseur | °C | 100 | 80 - 100 |
| Densité produit extrudé | g/l | 685 | 600 - 750 |

On obtient ainsi des boulettes de céréales non ou peu expansées présentant un diamètre de environ 5 mm que l'on peut transformer en flocons au bon goût de cuit par laminage et toastage.

## Revendications

1. Procédé de fabrication d'un produit alimentaire par extrusion, dans lequel on introduit, mélange et cuit une matière alimentaire dans un premier tronçon d'un extrudeur bivis, on prolonge la cuisson de la masse obtenue dans un cuiseur branché en parallèle sur le premier tronçon et un second tronçon de l'extrudeur séparé dynamiquement du premier, on réintroduit la masse cuite dans le second tronçon, on extrude la masse en la faisant passer au travers d'une filière et l'on découpe le produit extrudé.

2. Procédé selon la revendication 1, dans lequel on traite dans le premier tronçon de l'extrudeur une matière présentant une teneur en eau de 18-25% en poids, on maintient cette teneur en eau dans le cuiseur et on la réduit à 14-22% en poids dans le second tronçon par échappement de vapeur pour obtenir un produit expansé.

3. Procédé selon la revendication 2, dans lequel on déshydrate le produit expansé découpé jusqu'à une teneur en eau inférieure à 5 % en poids.

4. Procédé selon la revendication 1, dans lequel on traite dans le premier tronçon de l'extrudeur une matière présentant une teneur en eau de 24-36% en poids, et l'on maintient cette teneur en eau dans le cuiseur et dans le second tronçon pour obtenir un produit non ou peu expansé.

5. Procédé selon la revendication 4, dans lequel on transforme en flocons le produit non ou peu expansé découpé par laminage et toastage.

6. Installation pour la mise en oeuvre du procédé selon revendication 1, comprenant un extrudeur séparé en deux tronçons distincts par un dispositif de séparation dynamique, un cuiseur branché en parallèle sur le premier tronçon et le second tronçon, une filière et un dispositif de découpe.

7. Installation selon la revendication 6, dans laquelle le dispositif de séparation dynamique comprend une zone de blocage à pas inverse du bivis.

8. Installation selon la revendication 7, dans laquelle une ouverture de sortie du premier tronçon de l'extrudeur est prévue à cheval sur une zone de compression et la zone de blocage du bivis.

## Patentansprüche

1. Verfahren zur Herstellung eines Nahrungsmittelprodukts durch Extrusion, bei dem man ein Nahrungsmittelmaterial in einen ersten Teilabschnitt eines Doppelschneckenextruders eingibt, mischt und kocht, das Kochen der erhaltenen Masse in einem Kocher fortsetzt, der zu dem ersten Teilabschnitt und einem zweiten, von dem ersten dynamisch getrennten Teilabschnitt des Extruders parallel geschaltet ist, die gekochte Masse in den zweiten Teilabschnitt zurückführt, die Masse extrudiert, indem man sie durch eine Formdüse hindurchtreten läßt, und das extrudierte Produkt schneidet.

2. Verfahren nach Anspruch 1, bei dem man im ersten Teilabschnitt des Extruders ein Material behandelt, das einen Wassergehalt von 18-25 Gew.-% aufweist, man diesen Wassergehalt im Kocher beibehält und man ihn im zweiten Teilabschnitt auf 14-22 Gew.-% vermindert, indem man Dampf abzieht, um ein expandiertes Produkt zu erhalten.

3. Verfahren nach Anspruch 2, bei dem man das expandierte geschnittene Produkt auf einen Wassergehalt von unter 5 Gew.-% trocknet.

4. Verfahren nach Anspruch 1, bei dem man im ersten Teilabschnitt des Extruders ein Material behandelt, das einen Wassergehalt von 24-36 Gew.-% aufweist, und man diesen Wassergehalt im Kocher und im zweiten Teilabschnitt beibehält, um ein nicht oder nur geringfügig expandiertes Produkt zu erhalten.

5. Verfahren nach Anspruch 4, bei dem man das nicht oder nur geringfügig expandierte geschnittene Produkt durch Laminieren und Rösten in Flocken überführt.

6. Apparatur zur Durchführung des Verfahrens nach Anspruch 1, die einen mit einer Einrichtung zur dynamischen Trennung in zwei verschiedene Teilabschnitte getrennten Extruder, einen zu dem ersten und dem zweiten Teilabschnitt parallel geschalteten Kocher, eine Formdüse und eine Schneidvorrichtung aufweist.

7. Apparatur nach Anspruch 6, bei der die Einrichtung zur dynamischen Trennung eine Blockierzone mit einer inversen Steigung der Doppelschnecke aufweist.

8. Apparatur nach Anspruch 7, bei der eine Ausgangsöffnung aus dem ersten Teilabschnitt des Extruders vorgesehen ist, die eine Druckzone und die Blockierzone der Doppelschnecke überlappt.

## Claims

1. Process for producing a food product by extrusion, wherein a food material is introduced, blended and cooked in a first section of a twin-screw extruder, the cooking of the mass obtained is extended in a cooker joined in parallel onto the first section and a second section of the extruder dynamically separated from the first, the cooked mass is reintroduced into the second section, the mass is extruded by passing it through a die and the extruded product is cut up.

2. Process according to claim 1, wherein a material having a water content of 18-25 % by weight is treated in the first section of the extruder, this water content is maintained in the cooker and is reduced to 14-22 % by weight in the second section by the escape of steam in order to obtain an expanded product.

3. Process according to claim 2, wherein the expanded cut product is dehydrated to a water content below 5 % by weight.

4. Process according to claim 1, wherein a material having a water content of 24-36 % by weight is treated in the first section of the extruder, this water content is maintained in the cooker and in the second section in order to obtain an unexpanded or slightly expanded product.

5. Process according to claim 4, wherein the unexpanded or slightly expanded cut product is converted into flakes by rolling and toasting.

6. Installation for implementing the process according to claim 1, comprising an extruder separated into two distinct sections by a dynamic separating device, a cooker connected in parallel onto the first section and the second section, a die and a cutting device.

7. Installation according to claim 6, wherein the dynamic separating device comprises a blocking zone with an opposite thread to the twin screw.

8. Installation according to claim 7, wherein an outlet opening of the first section of the extruder is provided straddling the compression zone and the blocking zone of the twin screw.
